# FASCICULE DE BREVET EUROPEEN

(11) **EP 4 409 186 B1**
(45) Date de publication et mention de la délivrance du brevet: **29.10.2025**
(21) Numéro de dépôt: 22797418.5
(22) Date de dépôt: 30.09.2022
(51) Int. Cl.: F16L 37/56, F16L 37/18, F16L 37/252

(54) **CONNECTEUR DIPHASIQUE**
ZWEIPHASENVERBINDER
TWO-PHASE CONNECTOR

(30) Priorité: 30.09.2021 FR 2110341
(43) Date de publication de la demande: 07.08.2024
(73) Titulaire: Zelup, 69007 Lyon (FR)
(72) Inventeur: ISSLER, Thomas, 42410 VERIN (FR)
(74) Mandataire: IP Trust
(86) Numéro de dépôt international: PCT/FR2022/051849
(87) Numéro de publication internationale: WO 2023/052734

(56) Documents cités:
- DE-U1- 20 004 675
- US-A- 1 217 543
- US-A- 4 732 414
- US-B2- 8 919 783

## Description

### Domaine de l'invention

La présente invention concerne le domaine de la fluidique et plus précisément du raccordement par un connecteur de deux extrémités de tuyaux diphasiques présentant deux conduits coaxiaux. De tels tuyaux sont par exemple destinées à l'alimentation d'un équipement avec un liquide et de l'air ou un gaz sous pression, ou encore pour le transfert de deux fluides à contre-courant, notamment deux liquides ou un liquide et un gaz à contre-courant.

De tels tuyaux sont par exemple utilisés pour amener jusqu'à une buse de pulvérisation de l'eau sous pression et de l'air sous pression, pour des applications de décapage et de nettoyage de surfaces telles que des parois de murs, des véhicules ou des équipements industriels, ou encore pour des applications de lutte contre les incendies, pour augmenter l'efficacité avec une consommation d'eau moindre.

Il est usuel d'utiliser deux conduits, l'un pour amener l'air sous pression, l'autre pour amener l'eau sous pression qui sont raccorder l'un et l'autre sur deux connecteurs séparés de la buse. On a aussi proposé dans l'état de la technique des solutions « mono-raccord » où les deux phases sont amenées de manière coaxiale pour permettre un raccordement en une seule étape.

### Etat de la technique

Le brevet US1217543 divulgue un joint de tuyau pour tuyaux doubles avec un tuyau intérieur et un tuyau extérieur rigides concentriques et un joint constitué d'un bossage annulaire, la face du membre opposée audit bossage alésé à deux diamètres différents, le plus petit contre-alésage étant adapté pour s'adapter au tube intérieur. Le liquide de refroidissement circule dans le tube intérieur, et le liquide refroidit circule dans l'espace annulaire formé entre les parois des deux tubes.

Le brevet US4732414 divulgue un raccord pour des tuyaux coaxiaux ayant chacun des tuyaux intérieur et extérieur comprenant :
- une partie de joint mâle ayant une partie interne pour recevoir un tuyau interne de l'un desdits tuyaux coaxiaux et ayant un alésage interne communiquant avec ledit tuyau interne, une partie cylindrique externe pour recevoir le tuyau externe dudit un tuyau coaxial, un un corps alésé s'étendant d'un seul tenant depuis ladite partie extérieure, ledit corps définissant une pluralité d'alésages longitudinaux entre ledit corps et ladite partie intérieure pour communiquer avec ledit tuyau extérieur;
- une partie de joint femelle ayant une partie intérieure pour recevoir le tuyau intérieur de l'autre desdits tuyaux coaxiaux et ayant un alésage interne communiquant avec ledit tuyau intérieur de l'autre desdits tuyaux coaxiaux, une partie cylindrique extérieure pour recevoir le tuyau extérieur tuyau de l'autre desdits tuyaux coaxiaux, et un corps alésé s'étendant intégralement depuis ledit corps alésé à joint femelle, ledit corps alésé à joint femelle définissant une pluralité d'alésages longitudinaux entre ledit corps et ledit corps alésé à joint femelle pour communiquer avec ledit tuyau extérieur de l'autre desdits tuyaux coaxiaux
- lesdites parties intérieures de chacune desdites parties de joint mâle et femelle ayant sur une surface d'extrémité des saillies opposées et lesdites parties extérieures de chacune desdites parties de joint mâle et femelle ayant des saillies opposées sur la surface d'extrémité éloignée de ladite surface cylindrique extérieure;
- le corps alésé de l'une desdites parties ayant un filet de vis sur sa surface périphérique externe et le corps alésé de l'autre partie ayant une bride externe sur sa surface périphérique;
- une garniture métallique plate entre lesdites portions et ayant un passage interne faisant communiquer lesdits alésages internes desdites parties internes et des passages externes faisant communiquer lesdits alésages longitudinaux;
- et des moyens engageant ledit filetage de vis et ladite bride pour verrouiller lesdites parties mâle et femelle ensemble avec ladite garniture entre elles de sorte que lesdites saillies opposées sont poussées l'une vers l'autre avec ladite garniture entre elles de sorte que lesdites saillies sont pressées et scellées sur ladite garniture et lesdits alésages internes et les alésages longitudinaux sont étanches les uns aux autres et à l'atmosphère. L

Le brevet DE20004675 décrit un raccord fixe pour connecter une pièce de contre-raccord, à laquelle un tuyau, en particulier un tuyau d'incendie, est attaché, à une partie fixe, en particulier à une conduite ou un raccord rigide, le raccord fixe ayant un côté tuyau, premier anneau avec un pour accoupler la pièce de contre-accouplement attachée à la face d'extrémité prévue pour le tuyau, une face d'extrémité, une bague d'étanchéité élastique prévue sur la face d'extrémité et au moins une griffe faisant saillie axialement comme partie de une liaison à baïonnette entre la pièce d'accouplement conjuguée et l'accouplement fixe, caractérisée par une deuxième bague pouvant tourner avec la première bague et comportant des moyens de fixation à la partie fixe.

Le brevet US8919783 décrit un joint destiné à être utilisé avec des composants d'accouplement, le joint étant en un matériau élastomère compressible et ayant une forme généralement annulaire avec un axe longitudinal, une surface périphérique intérieure tournée radialement vers l'intérieur et une surface périphérique extérieure tournée radialement vers l'extérieur, des surfaces latérales tournées longitudinalement opposées , une partie de positionnement sensiblement adjacente à la surface périphérique externe, une partie d'étanchéité par compression sensiblement adjacente à la surface périphérique interne, et une partie de connexion entre la partie de positionnement et la partie d'étanchéité par compression, la partie de connexion ayant une épaisseur longitudinale sensiblement inférieure à l'épaisseur longitudinale de la partie d'étanchéité de compression, dans lequel au moins l'une des surfaces latérales de la partie d'étanchéité à compression comprend deux crêtes tournées vers l'extérieur séparées par une rainure tournée vers l'extérieur.

### Inconvénients de l'art antérieur

Les solutions de l'art antérieur ne sont pas totalement satisfaisantes car elles comportent un grand nombre de pièces mobiles rendant difficile l'étanchéification des deux phases, et nécessitant des manipulations complexes pour assurer le raccordement efficace et le verrouillage.

Par ailleurs, les solutions de l'art antérieur présentent généralement des parties réduisant localement la section du conduit ce qui occasionne des pertes de charge et des turbulences hydrauliques.

La solution décrite dans le brevet US1217543 n'est pas utilisable avec des tuyaux souples. tube intérieur est modifié pour former un bosselage annulaire : Cette solution n'est donc absolument pas applicable à un tuyau souple biphasique.

Enfin l'étanchéité entre les deux circuits fluidiques n'est pas toujours satisfaisante dans les solutions de l'art antérieur.

### Solution apportée par l'invention

Afin de remédier à ces inconvénients, l'invention, qui est définie par la revendication 1, concerne selon son acception la plus générale un système de raccordement fluidique destiné au raccordement de deux tuyaux diphasique souples.

Les tuyaux sont constitués de deux enveloppes coaxiales définissant une veine centrale s'écoulant dans l'enveloppe intérieure et une veine annulaire s'écoulant dans l'espace compris entre ladite enveloppe intérieure et l'enveloppe extérieure, ledit raccord comprenant un second connecteur destiné à être fixé sur l'extrémité de l'un desdits tuyaux diphasiques et un premier connecteur complémentaire destiné à être fixé sur l'extrémité complémentaire de l'autre desdits tuyaux diphasiques.
Le premier connecteur présente :
- une pièce de liaison centrale dont l'extrémité distale est configurée pour assurer la liaison étanche avec l'extrémité de l'enveloppe intérieure de l'un desdits tuyaux diphasiques et
- une pièce de liaison périphérique dont l'extrémité distale est configurée pour assurer la liaison étanche avec l'extrémité de l'enveloppe extérieure dudit tuyau diphasique, ladite pièce de liaison périphérique présentant une collerette intérieure frontale annulaire, traversée axialement par des lumières débouchant dans ladite veine périphérique
- lesdites pièces de liaison centrale et périphériques étant assemblées pour définir une surface transversale d'accouplement

Le second connecteur présente :
- une pièce de liaison centrale dont l'extrémité distale est configurée pour assurer la liaison étanche avec l'extrémité de l'enveloppe intérieure de l'autre desdits tuyaux diphasiques et
- une pièce de liaison périphérique dont l'extrémité distale est configurée pour assurer la liaison étanche avec l'extrémité de l'enveloppe extérieure dudit autre tuyau diphasique, ladite pièce de liaison périphérique présentant une collerette intérieure frontale annulaire, traversée axialement par des lumières débouchant dans ladite veine périphérique
- lesdites pièces de liaison centrale et périphérique étant assemblées pour définir une deuxième surface frontale transversale d'accouplement

Les premier connecteur et second connecteur présentant un moyen de verrouillage selon la direction axiale. Le raccord peut comporter en outre un disque d'étanchéité de forme annulaire avec des lumières axiales correspondant aux lumières axiales desdites collerette intérieure frontales.

Selon une première variante, lesdits premier et second connecteurs présentent un moyen de verrouillage selon la direction axial.

Selon une deuxième variante, lesdits premier et second connecteurs présentent un moyen de un moyen de verrouillage selon la direction angulaire et axiale par rotation relative d'une bague d'accouplement portant une alternance d'épaulements annulaires et d'espace intercalaires, avec une bague d'accouplement complémentaire portant une alternance de griffes présentant des épaulements annulaires.

Selon l'invention, ladite pièce centrale dudit premier connecteur est constituée par un manchon intérieur prolongé par un épaulement discal et un manchon extérieur tubulaire coaxial présentant une pluralité de trous taraudés axiaux, ledit manchon intérieur et ledit manchon extérieur tubulaire étant configurés pour enserrer l'extrémité de l'enveloppe intérieure de l'un desdits tuyaux diphasiques.

Selon un mode de réalisation particulier, ladite pièce périphérique dudit premier connecteur est constituée par un manchon présentant du coté distal une lèvre tubulaire dont le diamètre correspond au diamètre intérieur de ladite enveloppe extérieure, le manchon présentant une pluralité de trous taraudés axiaux, ledit manchon étant prolongé du côté proximal par une collerette intérieure traversée par des trous axiaux, ladite collerette définissant une lumière centrale d'une section correspondant à la section dudit manchon central, ledit manchon étant prolongé du coté proximal par un collier de verrouillage définissant une cavité de réception de l'extrémité du second connecteur ; ladite pièce de liaison périphérique comportant en outre un manchon extérieur tubulaire coaxial présentant une pluralité de trous axiaux, ledit manchon intérieur et ledit manchon extérieur tubulaire étant configurés pour enserrer l'extrémité de l'enveloppe extérieure dudit tuyau diphasique, ledit manchon intérieur et ledit manchon extérieur tubulaire étant assemblé par des vis axial traversant lesdits trous axiaux dudit manchon extérieur tubulaire pour venir dans lesdits trous taraudés axiaux dudit manchon.

Avantageusement, ladite pièce de liaison centrale et ladite pièce de liaison périphérique étant assemblée par des vis axiales traversant ladite collerette du manchon pour venir dans lesdits trous taraudés axiaux dudit manchon extérieur tubulaire de la pièce de liaison centrale.

Selon une variante ladite pièce centrale dudit second connecteur est constituée par un manchon intérieur prolongé par un épaulement discal et un manchon extérieur tubulaire coaxial présentant une pluralité de trous axiaux, ledit manchon intérieur et ledit manchon extérieur tubulaire étant configurés pour enserrer l'extrémité de l'enveloppe intérieure de l'autre desdits tuyaux diphasiques.

Selon un mode de réalisation spécifique, ladite pièce périphérique dudit second connecteur est constituée par un manchon présentant du coté distal une lèvre tubulaire dont le diamètre correspond au diamètre intérieur de ladite enveloppe extérieure, le manchon présentant une pluralité de trous taraudés axiaux, ledit manchon étant prolongé du côté proximal par une collerette intérieure traversée par des trous axiaux, ladite collerette définissant une lumière centrale, ledit manchon étant prolongé du coté proximal par un collier de verrouillage définissant une cavité de réception de l'extrémité du second connecteur; ladite pièce de liaison périphérique comportant en outre un manchon extérieur tubulaire coaxial présentant une pluralité de trous axiaux, ledit manchon intérieur et ledit manchon extérieur tubulaire étant configurés pour enserrer l'extrémité de l'enveloppe extérieure dudit tuyau diphasique, ledit manchon intérieur et ledit manchon extérieur tubulaire étant assemblé par des vis axial traversant lesdits trous axiaux dudit manchon extérieur tubulaire pour venir dans lesdits trous taraudés axiaux dudit manchon.

### Description détaillée d'un exemple non limitatif de réalisation

La présente invention sera mieux comprise à la lecture de la description qui suit, concernant un exemple non limitatif de réalisation illustré par les dessins annexés où :
[FIG. 1] la figure 1 représente une vue en coupe longitudinale d'un raccord selon une première variante de l'invention

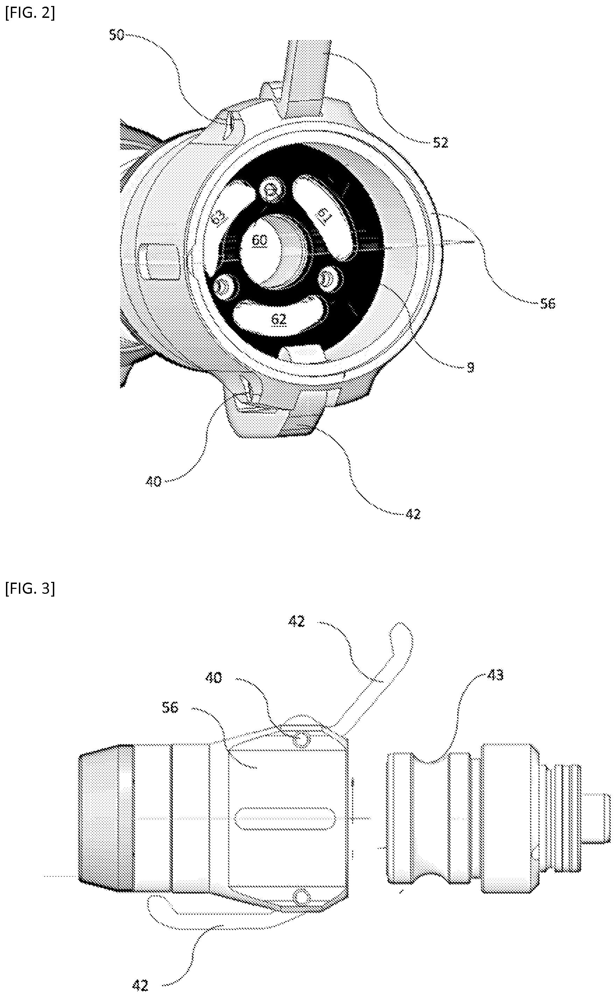

[FIG. 2] la figure 2 représente une vue en perspective du raccord équipé du disque d'étanchéité selon une première variante de l'invention
[FIG. 3] la figure 3 représente une vue de face d'un raccord selon une première variante de l'invention
[FIG. 4] la figure 4 représente une vue de face d'un disque d'étanchéité selon l'invention.
[FIG. 5] la figure 5 représente une vue en coupe longitudinale d'un assemblage de deux raccords selon une deuxième variante de l'invention
[FIG. 6] la figure 6 représente une vue en perspective partielle d'un raccord d'étanchéité selon une deuxième variante de l'invention.
[FIG. 7] la figure 7 représente une vue en perspective d'un raccord selon une deuxième variante de l'invention.
[FIG. 8] la figure 8 représente une de trois-quarts avant - d'un raccord selon une deuxième variante de l'invention.

### Description d'un exemple de raccord

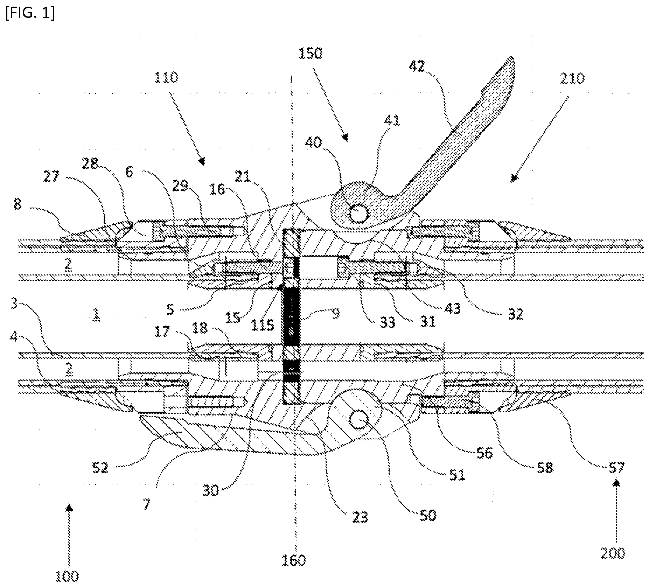

La figure 1 représente une vue en coupe longitudinale de deux tuyaux diphasiques (100, 200) réunis par un raccord selon l'invention.

Les tuyaux diphasiques sont constitués de deux enveloppes tubulaires (3, 4) concentriques définissant une veine centrale (1), délimitée par l'enveloppe intérieure (3), et une veine périphérique (2), définie par l'espace annulaire compris entre l'enveloppe intérieure (3) et l'enveloppe extérieure (4). Le fluide à la plus forte pression circule de préférence dans la veine centrale (1) et le fluide à plus faible pression circule dans la veine périphérique (2).

Le raccordement des extrémités des deux tuyaux diphasiques (100, 200) est réalisé par un premier connecteur (110) et un second raccord(210).

### Description du premier raccord (110)

Le premier connecteur est constitué d'une pièce de liaison centrale fixée sur l'extrémité frontale de l'enveloppe intérieure (3), et d'une pièce de liaison périphérique fixée sur l'extrémité frontale de l'enveloppe extérieure (4).

On désignera par « frontale » le coté le plus proche du plan médian transversal (160) correspondant à l'interface des deux tuyaux (100, 200), et par « distale » le coté le plus éloigné de ce plan médian (160).

La pièce de liaison centrale est constituée dudit premier connecteur (110) est constituée par un manchon intérieur (5) prolongé par un épaulement discal (15) évasé et par un manchon extérieur tubulaire (6) coaxial. Ce manchon extérieur (6) est effilé du côté distal pour et peut être constitué de languettes séparées par des encoches longitudinales pour limiter la perturbation du flux de fluide circulant dans la veine périphérique (2). Le manchon extérieur (6) s'évase du côté distal pour former un épaulement discal (15) présentant une pluralité de trous taraudés axiaux qui sont destiné à recevoir des vis (16) d'assemblage de la pièce de liaison centrale et de la pièce de liaison périphérique.

Ce manchon intérieur (5) et le manchon extérieur tubulaire (6) sont configurés pour enserrer l'extrémité de l'enveloppe intérieure (3) du tuyau diphasique (100). Ils présentent des rainures ou des cannelures (17, 18) annulaires destinées à renforcer l'ancrage de l'enveloppe intérieure (3) dans la pièce de liaison centrale.

La pièce de liaison périphérique est fixée sur l'extrémité frontale de l'enveloppe extérieure (4).

La pièce de liaison périphérique dont l'extrémité distale est configurée pour assurer la liaison étanche avec l'extrémité de l'enveloppe extérieure (4) dudit tuyau diphasique (100).

Elle est formée par un manchon (7) présentant une collerette frontale annulaire (21) et une jupe tubulaire distale (27), pleine ou formée par une alternance de dents et de fentes longitudinales. L'enveloppe périphérique (4) est coincée entre cette jupe tubulaire distale (27) et un manchon périphérique (8) entourant l'extrémité extérieure du tuyau diphasique (100) et présentant des perçages longitudinaux (28) destiné au passage de vis (29) assurant la liaison avec le manchon (7).

Le manchon (7) présente des lumières (30) traversant transversalement la couronne annulaire intérieure traversée également par les vis (15) d'assemblage de la pièce de liaison centrale et de la pièce de liaison périphérique. Ces lumières (30) sont réparties sur la périphérie de cette couronne pour permettre le passage du fluide circulant dans la veine périphérique (2).

Les pièces de liaison centrale et périphérique sont assemblées pour définir une surface transversale d'accouplement (115).

Le montage du premier connecteur (110) se fait en faisant glisser le manchon extérieur tubulaire (6) autour de l'enveloppe centrale (3) puis en engageant le manchon intérieur (5) dans l'enveloppe extérieure.

On enfile ensuite le manchon tubulaire extérieur (6) autour de l'enveloppe extérieure (4), et on introduit la jupe tubulaire distale (27) du manchon (7). On solidarise l'ensemble par les vis extérieures (29) assurant le serrage du manchon tubulaire extérieur (6) et du manchon (7) autour de l'enveloppe extérieure (4), ainsi que l'assemblage de la pièce de liaison centrale et de la pièce de liaison périphérique.

Le manchon (7) est prolongé, du côté opposé à la jupe tubulaire distale (27), par une bague tubulaire (23) destinée à recevoir l'extrémité du raccord mâle. Cette bague tubulaire est traversée par plusieurs pivots (40, 50) s'étendant dans un plan transversal et répartis angulairement autour de l'axe longitudinal. Ces pivots (40, 50) constituent l'axe d'articulation de cames (41, 51) asymétriques prolongées par des leviers (42, 52). Ces cames (41, 51) viennent s'engager dans des surfaces complémentaires formés par une gorge annulaire (43) entourant la surface extérieure du raccord mâle.

### Second raccord mâle

Le second raccord est également constitué par une pièce de liaison centrale et une pièce de liaison périphérique.

La pièce de liaison centrale est constituée par un manchon intérieur (31) et un manchon extérieur (32) destiné à enserrer l'enveloppe centrale (3). Ces deux manchons (31, 32) sont assemblés par vissage par des vis (33, 58) traversant également un alésage formé dans la pièce de liaison périphérique.

Cette pièce de liaison périphérique est formée d'un manchon (56) prolongé du côté distal par une jupe tubulaire, pleine ou fendue, venant s'engager à l'intérieur de l'enveloppe extérieure (4), et d'un second manchon (57) entourant la surface extérieure de l'enveloppe extérieure (4).

### Disque d'étanchéité

Les deux raccords femelle et second connecteur définissent des surfaces transversales traversées d'une lumière centrale, permettant l'écoulement de la veine centrale (1) et de lumières axiales formés dans une partie annulaire correspondant à la section comprise entre l'enveloppe extérieure (4) et l'enveloppe centrale (3), et permettant l'écoulement de la veine périphérique (2). L'étanchéité inter-lumières est assurée par un disque d'étanchéité (9) présentant également une lumière centrale (60) et des lumières périphériques (61 à 63).

### Deuxième variante de réalisation

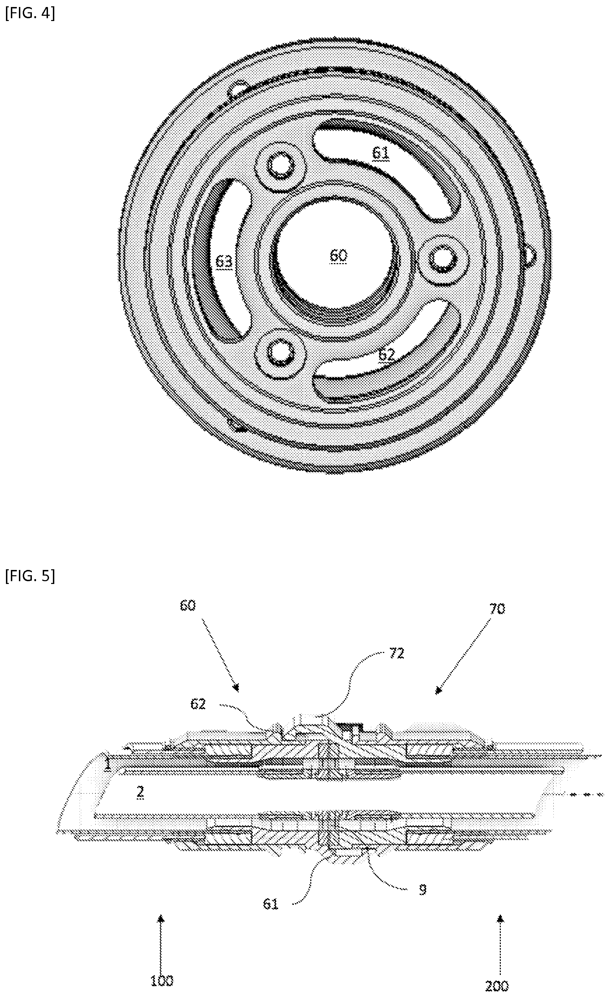

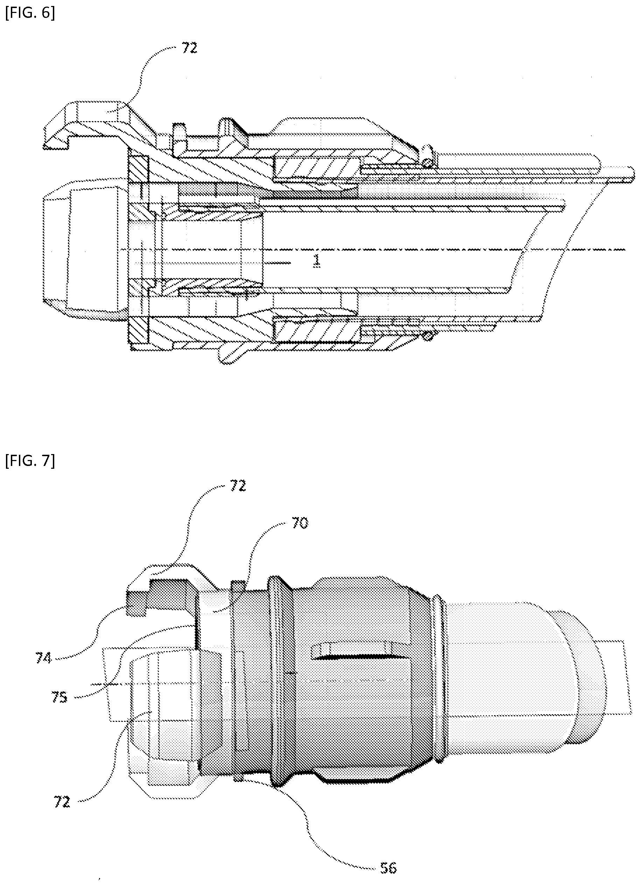

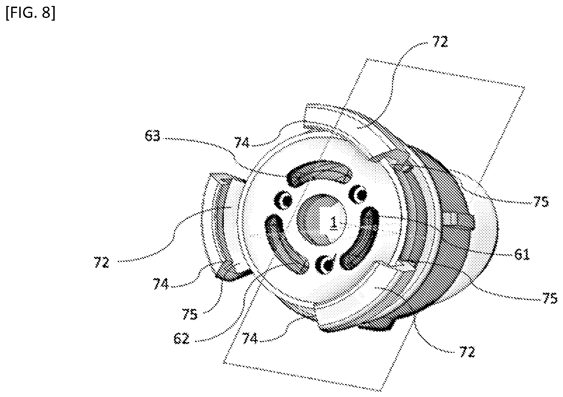

La deuxième variante de réalisation illustrée par les figures 5 à 8 diffère de la première variante de réalisation principalement par le mode de verrouillage : longitudinal dans le premier mode de réalisation, le verrouillage est réalisé longitudinalement, par des verrous empêchant la séparation axiale ; dans le second mode de réalisation, le verrouillage est réalisé angulairement, avec des griffes empêchant la séparation axiale lorsqu'elles sont intercalées radialement. Les autres caractéristiques ne sont pas systématiquement rappelées pour ce deuxième mode de réalisation lorsqu'elles restent inchangées, et elles sont alors transposable sur ce deuxième mode de réalisation.

L'accouplement est réalisé par deux bagues de raccordement complémentaires (60, 70), présentant l'un une alternance de griffes (72) et d'espace creux et l'autre une alternance d'épaulement (61, 62), et d'espace creux. L'engagement des deux raccords se fait en incrustant les espaces creux de la bague (60) avec les griffes (72) puis en appliquant une rotation relative pour que les épaulements (61, 62) de l'un des raccords viennent se positionner dans le creux des griffes (72) et soit maintenu dans un sens par l'épaulement semi-annulaire (74) des griffes (72) et dans l'autre sens par le bord périphérique (75) du raccord complémentaire.

## Revendications

1. Système de raccordement fluidique destiné au raccordement de deux tuyaux diphasique souples constitué de deux enveloppes (3, 4) coaxiales définissant une veine centrale (1) s'écoulant dans l'enveloppe intérieure (3) et une veine annulaire (2) s'écoulant dans l'espace compris entre ladite enveloppe intérieure (3) et l'enveloppe extérieure (4), ledit raccord comprenant un second connecteur (210) destiné à être fixé sur l'extrémité de l'un desdits tuyaux diphasiques (100) et un premier connecteur complémentaire (110) destiné à être fixé sur l'extrémité complémentaire de l'autre desdits tuyaux diphasiques (200), lesdits premier connecteur (110) et second connecteur (210) présentant un moyen de verrouillage (150) selon la direction axiale
∘ Ledit premier connecteur (110) présente
▪ une pièce de liaison centrale dont l'extrémité distale est configurée pour assurer la liaison étanche avec l'extrémité de l'enveloppe intérieure (3) de l'un desdits tuyaux diphasiques (100) et
▪ une pièce de liaison périphérique dont l'extrémité distale est configurée pour assurer la liaison étanche avec l'extrémité de l'enveloppe extérieure (4) dudit tuyau diphasique (100), ladite pièce de liaison périphérique présentant une collerette intérieure frontale annulaire, traversée axialement par des lumières débouchant dans ladite veine périphérique
▪ lesdites pièces de liaison centrale et périphériques étant assemblées pour définir une surface transversale d'accouplement
∘ Ledit second connecteur (210) présente :
▪ une pièce de liaison centrale dont l'extrémité distale est configurée pour assurer la liaison étanche avec l'extrémité de l'enveloppe intérieure (3) de l'autre desdits tuyaux diphasiques (200) et
▪ une pièce de liaison périphérique dont l'extrémité distale est configurée pour assurer la liaison étanche avec l'extrémité de l'enveloppe extérieure (4) dudit autre tuyau diphasique (200), ladite pièce de liaison périphérique présentant une collerette intérieure frontale annulaire, traversée axialement par des lumières débouchant dans ladite veine périphérique
▪ lesdites pièces de liaison centrale et périphérique étant assemblées pour définir une deuxième surface frontale transversale d'accouplement
le système étant **caractérisé en ce que** ladite pièce centrale dudit premier connecteur est constituée par un manchon intérieur (5) prolongé par un épaulement discal et un manchon extérieur tubulaire (6) coaxial présentant une pluralité de trous taraudés axiaux, ledit manchon intérieur (5) et ledit manchon extérieur tubulaire (6) étant configurés pour enserrer l'extrémité de l'enveloppe intérieure (3) de l'un desdits tuyaux diphasiques (100).

2. Système de raccordement fluidique destiné au raccordement de deux tuyaux diphasiques (110, 210) selon la revendication 1 **caractérisé en ce que** le ledit raccord comportant en outre un disque d'étanchéité (9) de forme annulaire avec des lumières axiales correspondant aux lumières axiales desdites collerette intérieure frontales.

3. Système de raccordement fluidique destiné au raccordement de deux tuyaux diphasiques (110, 210) selon la revendication 1 **caractérisé en ce que** lesdits premier connecteur (110) et second connecteur (210) présentent un moyen de verrouillage (150) selon la direction angulaire et axiale par rotation relative d'une bague d'accouplement (60) portant une alternance d'épaulements annulaires et d'espace intercalaires, avec une bague d'accouplement complémentaire portant une alternance de griffes présentant des épaulements annulaires.

4. Système de raccordement fluidique destiné au raccordement de deux tuyaux diphasiques (110, 210) selon la revendication 1 **caractérisé en ce que** ladite pièce périphérique dudit premier connecteur est constituée par un manchon (7) présentant du coté distal une lèvre tubulaire dont le diamètre correspond au diamètre intérieur de ladite enveloppe extérieure (4), le manchon présentant une pluralité de trous taraudés axiaux, ledit manchon (7) étant prolongé du côté proximal par une collerette intérieure traversée par des trous axiaux, ladite collerette définissant une lumière centrale d'une section correspondant à la section d'un manchon central (5), ledit manchon (7) étant prolongé du coté proximal par un collier de verrouillage définissant une cavité de réception de l'extrémité du second connecteur ; ladite pièce de liaison périphérique comportant en outre un manchon extérieur tubulaire (8) coaxial présentant une pluralité de trous axiaux, ledit manchon intérieur (7) et ledit manchon extérieur tubulaire (8) étant configurés pour enserrer l'extrémité de l'enveloppe extérieure (4) dudit tuyau diphasique (100), ledit manchon intérieur (7) et ledit manchon extérieur tubulaire (8) étant assemblé par des vis axiales traversant lesdits trous axiaux dudit manchon extérieur tubulaire (8) pour venir dans lesdits trous taraudés axiaux dudit manchon (7).

5. Système de raccordement fluidique destiné au raccordement de deux tuyaux diphasiques (110, 210) selon les revendications 1, 2 et 4 **caractérisé en ce que** ladite pièce de liaison centrale et ladite pièce de liaison périphérique étant assemblée par des vis axiales traversant ladite collerette du manchon (7) pour venir dans lesdits trous taraudés axiaux dudit manchon extérieur tubulaire (6) de la pièce de liaison centrale.

6. Système de raccordement fluidique destiné au raccordement de deux tuyaux diphasiques (110, 210) selon la revendication 1 **caractérisé en ce que** ladite pièce centrale dudit second connecteur est constituée par un manchon intérieur (7) prolongé par un épaulement discal et un manchon extérieur tubulaire (17) coaxial présentant une pluralité de trous axiaux, ledit manchon intérieur (7) et ledit manchon extérieur tubulaire (17) étant configurés pour enserrer l'extrémité de l'enveloppe intérieure (3) de l'autre desdits tuyaux diphasiques (200).

7. Système de raccordement fluidique destiné au raccordement de deux tuyaux diphasiques (110, 210) selon la revendication 1 **caractérisé en ce que** ladite pièce périphérique dudit second connecteur est constituée par un manchon présentant du coté distal une lèvre tubulaire dont le diamètre correspond au diamètre intérieur de ladite enveloppe extérieure (4), le manchon présentant une pluralité de trous taraudés axiaux, ledit manchon étant prolongé du côté proximal par une collerette intérieure traversée par des trous axiaux, ladite collerette définissant une lumière centrale, ledit manchon étant prolongé du coté proximal par un collier de verrouillage définissant une cavité de réception de l'extrémité du second connecteur; ladite pièce de liaison périphérique comportant en outre un manchon extérieur tubulaire coaxial présentant une pluralité de trous axiaux, ledit manchon intérieur et ledit manchon extérieur tubulaire étant configurés pour enserrer l'extrémité de l'enveloppe extérieure (4) dudit tuyau diphasique (100), ledit manchon intérieur (7) et ledit manchon extérieur tubulaire (8) étant assemblé par des vis axial traversant lesdits trous axiaux dudit manchon extérieur tubulaire (8) pour venir dans lesdits trous taraudés axiaux dudit manchon (7).

## Patentansprüche

1. Fluidisches Verbindungssystem zum Verbinden zweier flexibler Zweiphasenleitungen, bestehend aus zwei koaxialen Hüllen (3, 4), die eine zentrale Ader (1) definieren, die in der inneren Hülle (3) fließt und eine ringförmige Ader (2), die in den Raum zwischen der inneren Hülle (3) und der äußeren Hülle (4) fließt, wobei das Verbindungsstück einen zweiten Verbinder (210) zur Befestigung am Ende eines der Zweiphasenleitungen (100) umfasst und einen ersten komplementären Verbinder (110) zur Befestigung an dem komplementären Ende des anderen der Zweiphasenleitungen (200), wobei der erste Verbinder (110) und der zweite Verbinder (210) Verriegelungsmittel (150) in der axialen Richtung aufweisen;
o wobei der erste Verbinder (110) aufweist
▪ ein zentrales Verbindungsstück, dessen distales Ende so gestaltet ist, dass es eine dichte Verbindung mit dem Ende der inneren Hülle (3) eines der Zweiphasenleitungen (100) herstellt, und
▪ ein peripheres Verbindungsstück, dessen distales Ende so konfiguriert ist, dass es eine dichte Verbindung mit dem Ende der äußeren Hülle (4) der Zweiphasenleitung (100) herstellt, wobei das periphere Verbindungsstück einen ringförmigen vorderen Innenflansch aufweist, der axial von Lumen durchsetzt ist, die in die periphere Ader münden
▪ wobei die zentralen und peripheren Verbindungsstücke zusammengefügt werden, um eine transversale Kupplungsfläche zu definieren
∘ wobei der zweite Verbinder (210) aufweist:
▪ ein zentrales Verbindungsstück, dessen distales Ende so gestaltet ist, dass es eine dichte Verbindung mit dem Ende der inneren Hülle (3) des anderen der beiden Zweiphasenleitungen (200) herstellt, und
▪ ein peripheres Verbindungsstück, dessen distales Ende so konfiguriert ist, dass es eine dichte Verbindung mit dem Ende der äußeren Hülle (4) der anderen Zweiphasenleitung (200) herstellt, wobei das periphere Verbindungsstück einen ringförmigen vorderen Innenflansch aufweist, der axial von Lumen durchsetzt ist, die in die periphere Ader münden
▪ wobei die zentralen und peripheren Verbindungsstücke zusammengefügt werden, um eine zweite vordere quer verlaufende Kupplungsfläche zu definieren,
wobei das System dadurch charakterisiert ist, dass das Mittelstück des ersten Verbinders aus einer inneren Hülse (5), die durch eine scheibenförmige Schulter verlängert ist, und einer koaxialen rohrförmigen äußeren Hülse (6) mit einer Vielzahl von axialen Gewindelöchern besteht, wobei die innere Hülse (5) und die rohrförmige äußere Hülse (6) so konfiguriert sind, dass sie das Ende der inneren Hülle (3) von einem der Zweiphasenleitungen (100) umschließen.

2. Fluidisches Verbindungssystem zum Verbinden von zwei Zweiphasenleitungen (110, 210) nach Anspruch 1, **dadurch gekennzeichnet, dass** die Verbindung außerdem eine ringförmige Dichtungsscheibe (9) mit axialen Lumen umfasst, die den axialen Lumen der genannten vorderen Innenflanschen entsprechen.

3. Fluidisches Verbindungssystem zum Verbinden von zwei Zweiphasenleitungen (110, 210) nach Anspruch 1, **dadurch gekennzeichnet, dass** der erste Verbinder (110) und der zweite Verbinder (210) ein Verriegelungsmittel (150) in der Winkel- und Axialrichtung durch relative Drehung eines Kupplungsrings (60) aufweisen, der abwechselnd ringförmige Schultern und Zwischenräume trägt, mit einem komplementären Kupplungsring, der abwechselnd Klauen mit ringförmigen Schultern trägt.

4. Fluidisches Verbindungssystem zur Verbindung von zwei Zweiphasenleitungen (110, 210) nach Anspruch 1, **dadurch gekennzeichnet, dass** das Umfangsteil des ersten Verbinders aus einer Hülse (7) besteht, die auf der distalen Seite eine rohrförmige Lippe aufweist, deren Durchmesser dem Innendurchmesser der äußeren Hülle (4) entspricht, die Hülse eine Vielzahl von axialen Gewindelöchern aufweist, wobei die Hülse (7) an der proximalen Seite durch einen Innenflansch verlängert ist, der von axialen Löchern durchsetzt ist, wobei der Flansch ein zentrales Lumen mit einem Querschnitt definiert, der dem Querschnitt einer zentralen Hülse (5) entspricht, wobei die Hülse (7) an der proximalen Seite durch einen Verriegelungsring verlängert ist, der einen Hohlraum zur Aufnahme des Endes des zweiten Verbinders definiert; wobei das periphere Verbindungsstück außerdem eine koaxiale rohrförmige äußere Hülse (8) mit einer Vielzahl von axialen Löchern umfasst, wobei die innere Hülse (7) und die rohrförmige äußere Hülse (8) so konfiguriert sind, dass sie das Ende der äußeren Hülle(4) der Zweiphasenleitung (100) umschließen, wobei die innere Hülse (7) und die rohrförmige äußere Hülse (8) durch axiale Schrauben zusammengefügt sind, die durch die axialen Löcher der rohrförmigen äußeren Hülse (8) in die axialen Gewindelöcher der Hülse (7) eingreifen.

5. Fluidisches Verbindungssystem zum Verbinden von zwei Zweiphasenleitungen (110, 210) nach den Ansprüchen 1, 2 und 4, **dadurch gekennzeichnet, dass** das zentrale Verbindungsstück und das periphere Verbindungsstück durch axiale Schrauben zusammengefügt sind, die durch den Hülsenflansch (7) hindurchgehen, um in die axialen Gewindelöcher der rohrförmigen äußeren Hülse (6) des zentralen Verbindungsstücks einzugreifen.

6. Fluidverbindungssystem zum Verbinden von zwei Zweiphasenleitungen (110, 210) nach Anspruch 1, **dadurch gekennzeichnet, dass** das Mittelstück des zweiten Verbinders aus einer inneren Hülse (7) besteht, die durch eine scheibenförmige Schulter verlängert ist und einer koaxialen rohrförmigen äußere Hülse (17) mit einer Vielzahl von axialen Löchern, wobei die innere Hülse (7) und die rohrförmige äußere Hülse (17) so konfiguriert sind, dass sie das Ende der inneren Hülle (3) des anderen der Zweiphasenleitungen (200) umschließen.

7. Fluidisches Verbindungssystem zur Verbindung von zwei Zweiphasenleitungen (110, 210) nach Anspruch 1, **dadurch gekennzeichnet, dass** das Umfangsteil des zweiten Verbinders aus einer Hülse besteht, die auf der distalen Seite eine rohrförmige Lippe aufweist, deren Durchmesser dem Innendurchmesser der äußeren Hülle (4) entspricht, die Hülse eine Vielzahl von axialen Gewindelöchern aufweist, wobei die Hülse an der proximalen Seite durch einen Innenflansch verlängert ist, durch den axiale Löcher verlaufen, wobei der Flansch ein zentrales Lumen definiert, wobei die Hülse an der proximalen Seite durch einen Sperrkragen verlängert ist, der einen Hohlraum zur Aufnahme des Endes des zweiten Verbinders definiert; das periphere Verbindungsstück weiter eine koaxiale rohrförmige äußere Hülse mit einer Vielzahl von axialen Löchern umfasst, wobei die innere Hülse und die rohrförmige äußere Hülse so konfiguriert sind, dass sie das Ende der äußeren Hülle (4) der Zweiphasenleitung (100) umschließen, wobei die innere Hülse (7) und die rohrförmige äußere Hülse (8) durch axiale Schrauben zusammengebaut ist, die durch die axialen Löcher der rohrförmigen äußeren Hülse (8) in die axialen Gewindelöcher der Hülse (7) gehen.

## Claims

1. A fluid connection system for connecting two flexible two-phase pipes consisting of two coaxial jackets (3, 4) defining a central vein (1) flowing in the inner jacket (3) and an annular vein (2) flowing in the space comprised between said inner jacket (3) and the outer jacket (4), said coupling comprising a second connector (210) intended to be fastened to the end of one of said two-phase pipes (100) and a first complementary connector (110) intended to be attached to the complementary end of the other of said two-phase pipes (200), said first connector (110) and second connector (210) having a locking means (150) in the axial direction
o Said first connector (110) has
▪ a central connecting part whose distal end is configured to ensure the fluidtight connection with the end of the inner jacket (3) of one of said two-phase pipes (100) and
▪ a peripheral connecting part whose distal end is configured to ensure the fluidtight connection with the end of the outer jacket (4) of said two-phase pipe (100), said peripheral connecting part having an annular front inner flange, axially traversed by apertures opening into said peripheral vein
▪ said central and peripheral connecting parts being assembled to define a transverse coupling surface
o Said second connector (210) has:
▪ a central connecting part whose distal end is configured to ensure the fluidtight connection with the end of the inner jacket (3) of the other one of said two-phase pipes (200) and
▪ a peripheral connecting part whose distal end is configured to ensure the fluidtight connection with the end of the outer jacket (4) of said other two-phase pipe (200), said peripheral connecting part having an annular front inner flange, axially traversed by apertures opening into said peripheral vein
▪ said central and peripheral connecting parts being assembled to define a second transverse coupling front surface
the system being **characterised in that** said central part of said first connector consists of an inner sleeve (5) extended by a discal shoulder and a coaxial tubular outer sleeve (6) having a plurality of axial tapped holes, said inner sleeve (5) and said tubular outer sleeve (6) being configured to grip the end of the inner jacket (3) of one of said two-phase pipes (100).

2. The fluid connection system for connecting two two-phase pipes (110, 210) according to claim 1, **characterised in that** said coupling further comprises an annular-shaped sealing disc (9) with axial apertures corresponding to the axial apertures of said front inner flange.

3. The fluid connection system for connecting two two-phase pipes (110, 210) according to claim 1, **characterised in that** said first connector (110) and second connector (210) have a locking means (150) in the angular and axial direction by relative rotation of a coupling ring (60) carrying an alternation of annular shoulders and intermediate spaces, with a complementary coupling ring carrying an alternation of claws having annular shoulders.

4. The fluid connection system for connecting two two-phase pipes (110, 210) according to claim 1, **characterised in that** said peripheral part of said first connector consists of a sleeve (7) having on the distal side a tubular lip whose diameter corresponds to the inside diameter of said outer jacket (4), the sleeve having a plurality of axial tapped holes, said sleeve (7) being extended on the proximal side by an inner flange traversed by axial holes, said flange defining a central aperture with a cross-section corresponding to the cross-section of a central sleeve (5), said sleeve (7) being extended on the proximal side by a locking collar defining a cavity for receiving the end of the second connector; said peripheral connecting part further including a coaxial tubular outer sleeve (8) having a plurality of axial holes, said inner sleeve (7) and said tubular outer sleeve (8) being configured to grip the end of the outer jacket (4) of said two-phase pipe (100), said inner sleeve (7) and said tubular outer sleeve (8) being assembled by axial screws passing through said axial holes of said tubular outer sleeve (8) to fit into said axial tapped holes of said sleeve (7).

5. The fluid connection system for connecting two two-phase pipes (110, 210) according to claims 1, 2 and 4, **characterised in that** said central connecting part and said peripheral connecting part are assembled by axial screws passing through said flange of the sleeve (7) to fit into said axial tapped holes of said tubular outer sleeve (6) of the central connecting part.

6. The fluid connection system for connecting two two-phase pipes (110, 210) according to claim 1, **characterised in that** said central part of said second connector consists of an inner sleeve (7) extended by a discal shoulder and a coaxial tubular outer sleeve (17) having a plurality of axial holes, said inner sleeve (7) and said tubular outer sleeve (17) being configured to grip the end of the inner jacket (3) of the other one of said two-phase pipes (200).

7. The fluid connection system for connecting two two-phase pipes (110, 210) according to claim 1, **characterised in that** said peripheral part of said second connector consists of a sleeve having on the distal side a tubular lip whose diameter corresponds to the inside diameter of said outer jacket (4), the sleeve having a plurality of axial tapped holes, said sleeve being extended on the proximal side by an inner flange traversed by axial holes, said flange defining a central aperture, said sleeve being extended on the proximal side by a locking collar defining a cavity for receiving the end of the second connector; said peripheral connecting part further comprising a coaxial tubular outer sleeve having a plurality of axial holes, said inner sleeve and said tubular outer sleeve being configured to grip the end of the outer jacket (4) of said two-phase pipe (100), said inner sleeve (7) and said tubular outer sleeve (8) being assembled by axial screws passing through said axial holes of said tubular outer sleeve (8) to fit into said axial tapped holes of said sleeve (7).
